Europäisches Patentamt

European Patent Office

Office européen des brevets

(19)

(11) Numéro de publication : **0 424 203 B1**

(12) **FASCICULE DE BREVET EUROPEEN**

(45) Date de publication du fascicule du brevet :
**16.12.92 Bulletin 92/51**

(51) Int. Cl.⁵ : **F16L 3/22**

(21) Numéro de dépôt : **90402729.9**

(22) Date de dépôt : **03.10.90**

(54) **Dispositif de maintien de tubes ou analogues.**

(30) Priorité : **17.10.89 FR 8913519**

(43) Date de publication de la demande :
**24.04.91 Bulletin 91/17**

(45) Mention de la délivrance du brevet :
**16.12.92 Bulletin 92/51**

(84) Etats contractants désignés :
**DE GB IT**

(56) Documents cités :
**FR-A- 2 626 651**
**GB-A- 2 158 143**
**US-A- 2 657 890**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Mira, Philippe**
**3, Rue Georges Sand**
**F-28110 Luce (FR)**

(74) Mandataire : **Robert, Jean-François**
**PSA Peugeot Citroen Centre Technique**
**Citroen CV 2 route de Gizy**
**F-78140 Velizy Villacoublay (FR)**

EP 0 424 203 B1

Jouve, 18, rue Saint-Denis, 75001 PARIS

## Description

L'invention a pour objet un dispositif de maintien de tubes ou objets analogues tels que les canalisations hydrauliques utilisées dans les véhicules automobiles.

Pour des raisons de commodité, les canalisations d'essence, de liquide de frein, etc... sont rassemblées en faisceaux et ces derniers sont fixés sous le plancher ou contre d'autres parois du véhicule. Pour cela, on utilise des dispositifs répartis de place en place le long du faisceau et dont chacun comporte un support que l'on fixe à la paroi, chaque support présentant un ou plusieurs logements pour les tubes.

Dans la plupart des dispositifs actuellement utilisés, chaque logement est pourvu de deux languettes élastiques qui s'écartent lors de l'introduction du tube, puis reprennent leur place initiale, empêchant ainsi l'extraction ultérieure du tube.

Or, il arrive que, malgré la présence des languettes, certains tubes quittent leurs logements, en particulier lors des manutentions du faisceau au montage du véhicule.

Cet incident peut résulter de plusieurs causes, notamment de déformations des tubes dues à une mauvaise fabrication ou aux manipulations lors du montage ou encore à des chocs contre d'autres pièces, soit lors du montage du faisceau, soit lors du montage des autres pièces, une fois le faisceau mis en place.

L'invention a pour but de remédier à ces inconvénients en proposant un dispositif de maintien de tubes ou analogues qui empêche ceux-ci de sortir de leurs logements, même en cas de déformations ou de chocs.

Le dispositif de l'invention est du type comprenant un support présentant au moins un logement dans lequel un tube peut être maintenu grâce à des moyens de retenue, ce logement débouchant dans un espace communiquant avec l'extérieur.

Selon l'invention ce dispositif comprend en outre:
- une pièce pouvant être montée sur le support au moins une partie de cette pièce se trouvant dans ledit espace et ayant une configuration telle qu'elle puisse retenir un tube qui sortirait accidentellement de son logement; et
- des moyens de maintien de cette pièce sur le support.

Dans un premier mode de réalisation, cette pièce est emmanchée à force entre deux éléments du support, le maintien étant assuré par la force d'emmanchement.

Dans un deuxième mode de réalisation, les moyens de maintien de cette pièce sont des moyens de clippage.

Dans ce cas, selon une première variante, ces moyens de maintien comprennent au moins un bossage sur une languette souple prévue sur ladite pièce ou le support, ce bossage étant apte à pénétrer à force dans un logement ou une cavité prévu sur le support ou ladite pièce.

Selon une deuxième variante, les moyens de maintien comprennent une saillie en forme de V sur une languette souple prévue sur ladite pièce ou le support, cette saillie étant apte à pénétrer à force dans une gorge de forme correspondante prévue sur le support ou ladite pièce.

Dans le cas où les moyens de retenue du tube comprennent au moins une languette souple orientée de manière à autoriser l'introduction du tube dans le logement et à empêcher son extraction, la partie de la pièce qui se trouve dans ledit espace peut avoir une portion qui se trouve au voisinage immédiat de cette languette afin de la retenir.

L'invention s'applique, entr'autres, au cas où le support présente deux logements disposés en vis-à-vis et débouchant dans ledit espace, ce dernier étant fermé d'un côté par une paroi du support et débouchant à l'extérieur par une ouverture. Dans ce cas, ladite pièce peut avoir une forme telle qu'elle bouche cette ouverture et occupe la quasi-totalité dudit espace.

Enfin, avec ce type de support, si chaque logement est pourvu de deux languettes élastiques, la pièce précitée est avantageusement pourvue de deux renflements qui occupent la partie de cet espace située entre les languettes.

L'invention apparaîtra mieux à la lecture de la description qui va suivre, donnée à titre d'exemple non limitatif, en référence aux dessins annexés dans lesquels:
- la Figure 1 est une vue schématique, en élévation et en coupe suivant la ligne I-I de la figure 3, d'un dispositif conforme à l'invention;
- la Figure 2 est une vue schématique en coupe suivant la ligne II-II de la figure 1, montrant comment la pièce supplémentaire est maintenue sur le support par une saillie en V pénétrant dans une gorge;
- la Figure 3 est une vue de dessus du dispositif de la figure 1; et
- la Figure 4 est une vue schématique en coupe, à échelle agrandie, montrant comment la saillie de la figure 2 peut être remplacée par un bossage.

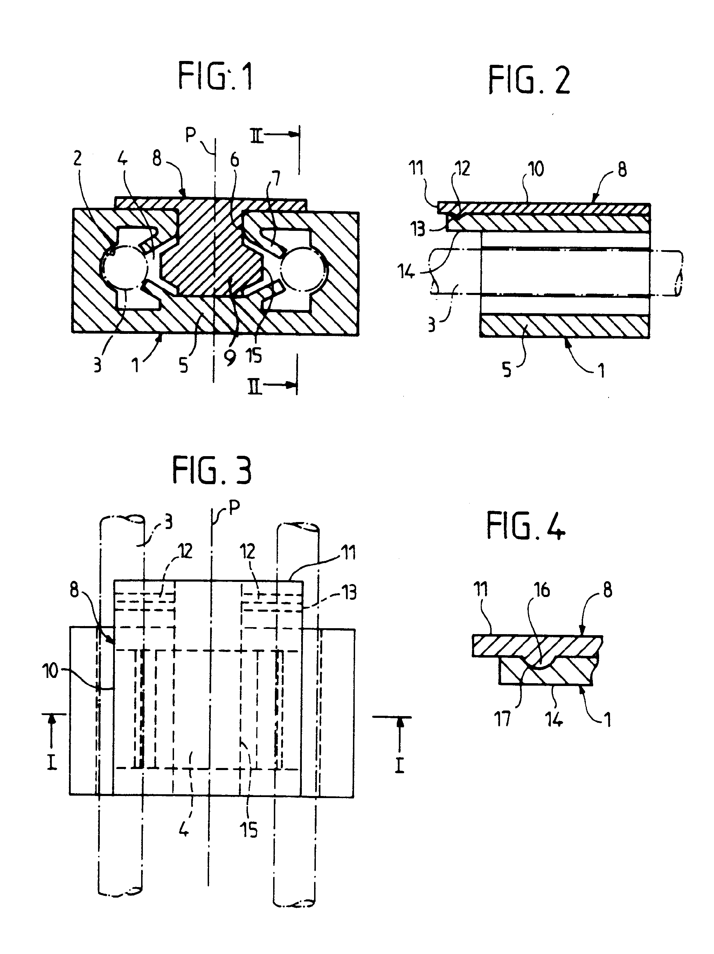

Si l'on se reporte d'abord aux figures 1 à 3, on voit que le dispositif de l'invention se compose essentiellement d'un support, portant la référence générale 1, destiné à maintenir des tubes, par exemple des tubes de petit diamètre (de l'ordre de quelques millimètres) tels que les canalisations d'essence, de liquide de frein, etc... utilisées dans les véhicules automobiles. Le support 1, qui est généralement en matière plastique, peut éventuellement être fixé sous le plancher du véhicule ou sur une autre paroi de celui-ci à l'aide de moyens de fixation connus en soi (par exemple des rivets à expansion) et qui ne sont pas représentés aux dessins.

Dans l'exemple décrit ici, le support 1 comporte deux logements 2 pour des tubes 3 représentés schématiquement en traits mixtes. Le support 1 est symétrique par rapport à un plan P perpendiculaire au plan des figures 1 et 3. Les logements 2 sont disposés en vis-à-vis et symétriquement par rapport à ce plan. Ils débouchent dans un espace 4 situé au centre du support. Cet espace est fermé à la partie inférieure du support par une paroi 5 de celui-ci et communique avec l'extérieur par une ouverture 6 située du côté opposé à la paroi 5.

Pour mettre en place les tubes 3, ceux-ci sont introduits dans l'espace 4 par l'ouverture 6, leur direction longitudinale étant perpendiculaire au plan de la figure 1. Ils sont ensuite introduits dans les logements 2 en passant entre deux languettes 7 prévues à l'entrée de chaque logement. De telles languettes existent dans de nombreux types de supports de tubes: elles sont orientées de manière à s'écarter lors de l'introduction du tube, puis à reprendre leur place initiale une fois que celui-ci est dans son logement. Leur forme et leur disposition sont telles qu'elles interdisent toute sortie ultérieure du tube.

Or, dans le cas des faisceaux de canalisations hydrauliques pour véhicules automobiles notamment, il arrive que, malgré la présence des languettes, les tubes sortent de leurs logements suite à des chocs ou à des déformations qu'ils subissent. Pour éviter cela, on a prévu, conformément à l'invention, une pièce supplémentaire 8 montée sur le support 1.

Dans le mode de réalisation illustré aux dessins, la pièce 8 est également symétrique par rapport au plan P. Elle se compose essentiellement d'un corps 9 surmonté d'une tablette 10. Lorsqu'elle est en place sur le support 1, le corps 9 obture l'ouverture 6 et occupe la majeure partie de l'espace 4 tandis que la tablette 10 est en appui sur une face supérieure externe du support 1.

Comme on le voit mieux aux figures 2 et 3, la tablette 10 se termine à la partie antérieure de la pièce 8 par une languette souple 11 munie de deux saillies 12 à section en V. Chaque saillie 12 peut pénétrer dans une gorge 13 de forme correspondante prévue sur une bride 14 du support 1.

La mise en place de la pièce 8 sur le support 1 se fait par un mouvement de translation suivant une direction parallèle à l'axe des tubes, après que ceux-ci ont été mis en place, jusqu'à ce que les saillies 12 pénètrent dans les gorges 13, assurant ainsi le blocage de la pièce 8.

On comprend que la présence de la pièce 8 empêche toute sortie accidentelle des tubes. En effet, même si ces derniers, sous l'effet d'un choc ou d'un effort important, quittaient leurs logements en passant au-delà des languettes 7, ils buteraient contre le corps 9 de la pièce 8 qui occupe l'espace 4.

De plus, dans le mode de réalisation illustré aux figures 1 à 3, le corps 9 de la pièce 8 présente deux renflements 15 qui se trouvent dans la partie de l'espace 4 située entre les languettes 7. On obtient ainsi un maintien encore plus efficace des tubes puisque les renflements 15 retiennent les languettes 7, ce qui diminue les risques de déformation ou de rupture de celles-ci.

Ainsi, le dispositif objet de l'invention présente des avantages particulièrement intéressants dont le principal est d'assurer un maintien efficace des tubes dans leurs logements. De plus, la pièce 8 peut être mise en place, et éventuellement extraite. facilement et sa fabrication ne pose pas de problème particulier puisqu'elle peut être réalisée en matière plastique.

Enfin, il est bien entendu que l'invention ne se limite pas au seul mode de réalisation qui vient d'être décrit, mais qu'on peut imaginer de nombreuses variantes sans sortir du cadre de l'invention. C'est ainsi que l'homme du métier pourra faire varier la forme et les dimensions de la pièce 8 en fonction du type de support utilisé.

De même, il est possible d'utiliser d'autres modes de fixation de cette pièce sur le support. La figure 4 illustre une variante dans laquelle les saillies 12 sont remplacées par un bossage 16 apte à pénétrer dans un logement ou une cavité 17 de la bride 14.

La pièce 8 pourrait encore être introduite à force entre deux éléments du support 1, son maintien étant assuré par la force d'emmanchement. Par exemple, dans le cas de la figure 1, on pourrait supprimer la majeure partie de la tablette 10, la pièce 8 étant introduite à force entre les bords de l'ouverture 6.

## Revendications

1. Dispositif de maintien de tubes (3) ou analogues, comprenant un support (1) présentant deux logements (2) disposés en vis-à-vis et débouchant dans un espace (4) fermé d'un côté par une paroi (5) du support (1) et communiquant avec l'extérieur par une ouverture (6), chaque logement (2) étant pourvu de deux languettes souples (7) orientées de manière à autoriser l'introduction d'un tube (3) dans ce logement et à empêcher son extraction, caractérisé en ce qu'il comprend en outre:

   - une pièce (8) pouvant être montée sur le support (1), au moins une partie (9) de cette pièce (8) ayant une forme telle qu'elle bouche ladite ouverture (6) et occupe la quasi-totalité dudit espace (4), cette partie (9) de cette pièce (8) présentant deux renflements (15) occupant chacun la portion dudit espace (4) située entre les deux languettes (7) d'un logement (2) afin de les retenir; et
   - des moyens de maintien de cette pièce (8) sur le support (1).

2.   Dispositif selon la revendication 1, caractérisé en ce que ladite pièce (8) est emmanchée à force entre deux éléments du support (1), le maintien étant assuré par la force d'emmanchement.

3.   Dispositif selon la revendication 1, caractérisé en ce que les moyens de maintien de ladite pièce (8) sont des moyens de clippage.

4.   Dispositif selon la revendication 3, caractérisé en ce que lesdits moyens de maintien comprennent au moins un bossage (16) sur une languette souple (11) prévue sur ladite pièce (8) ou le support (1), ce bossage (16) étant apte à pénétrer à force dans un logement (17) prévu sur le support (1) ou ladite pièce (8).

5.   Dispositif selon la revendication 3, caractérisé en ce que lesdits moyens de maintien comprennent au moins une saillie (12) en forme de V sur une languette souple (11) prévue sur ladite pièce (8) ou le support (1), cette saillie (12) étant apte à pénétrer à force dans une gorge (13) de forme correspondante prévue sur le support (1) ou ladite pièce (8).

**Patentansprüche**

1.   Haltevorrichtung für Rohre (3) oder dgl., mit einer Stütze (1), die zwei Aufnahmen (2) aufweist, die einander gegenüberliegend angeordnet sind und in einen Raum (4) münden, der einerseits durch eine Seitenwand (5) der Stütze (1) geschlossen ist und mit dem Äußeren durch eine Öffnung (6) in Verbindung steht, wobei jede Aufnahme (2) mit zwei biegsamen Zungen (7) versehen ist, die derart ausgerichtet sind, daß sie das Einführen eines Rohres (3) in diese Aufnahme erlauben und daß sie sein Herausziehen verhindern, **dadurch gekennzeichnet**, daß sie weiterhin aufweist:
ein Teil (8), das auf der Stütze (1) montiert werden kann, wobei wenigstens ein Bereich (9) dieses Teils (8) eine derartige Form aufweist, daß es die Öffnung (6) zustopft und praktisch den gesamten Raum (4) besetzt, wobei dieser Bereich (9) dieses Teils (8) zwei Verstärkungen (15) aufweist, die jeweils den Bereich des Raumes (4) besetzen, der zwischen den beiden Zungen (7) einer Aufnahme (2) angeordnet ist, um sie zurückzuhalten; und
Halteeinrichtungen dieses Teils (8) auf der Stütze (1).

2.   Vorrichtung nach Anspruch 1, **dadurch gekennzeichnet**, daß das Teil (8) unter Kraft zwischen zwei Elemente der Stütze (1) eingedrückt ist, wobei die Halterung durch die Eindrückkraft sichergestellt ist.

3.   Vorrichtung nach Anspruch 1, **dadurch gekennzeichnet**, daß die Rückhalteeinrichtungen des Teils (8) Klemmeinrichtungen sind.

4.   Vorrichtung nach Anspruch 3, **dadurch gekennzeichnet**, daß die Halteeinrichtungen wenigstens einen Vorsprung (16) auf einer biegsamen Zunge (11) aufweisen, die an dem Teil (8) oder der Stütze (1) vorgesehen ist, wobei dieser Vorsprung (16) geeignet ist, unter Kraftaufwendung in eine Aufnahme (17) einzudringen, die an der Stütze (1) oder dem Teil (8) vorgesehen ist.

5.   Vorrichtung nach Anspruch 3, **dadurch gekennzeichnet**, daß die Halteeinrichtungen wenigstens einen Vorsprung (12) in Form eines V auf einer biegsamen Zunge (11) aufweisen, die an dem Teil (8) oder der Stütze (1) vorgesehen ist, wobei der Vorsprung (12) geeignet ist, unter Kraftaufwendung in eine Kerbe (13) von entsprechender Form einzudringen, die an der Stütze (1) oder dem Teil (8) vorgesehen ist.

**Claims**

1.   A device for holding tubes (3) or similar, comprising a support (1) having two housings (2) arranged so as to face each other and opening into a space (4) closed off on one side by a wall (5) of the support (1) and communicating with the outside by an opening (6), each housing (2) being provided with two flexible tongues (7) positioned so as to allow the insertion of a tube (3) into this housing and to prevent its extraction, characterised in that it further comprises:
- a part (8) which can be fitted to the support (1), at least one portion (9) of this part (8) being shaped such that it blocks said opening (6) and occupies almost all said space (4), this portion (9) of this part (8) having two protrusions (15) each occupying the portion of said space (4) situated between the two tongues (7) of a housing (2) in order to hold them back; and
- means for holding this part (8) in place on the support (1).

2.   A device according to Claim 1, characterised in that said part (8) is forcibly pushed between two elements of the support (1), the holding in place being ensured by the force fit.

3.   A device according to Claim 1, characterised in that the means for holding this part (8) in place are clipping means.

4. A device according to Claim 3, characterised in that said holding means comprise at least one boss (16) on a flexible tongue (11) provided on said part (8) or the support (1), this boss (16) being suitable for forcibly penetrating into a housing (17) provided on the support (1) or said part (8).

5. A device according to Claim 3, characterised in that said holding means comprise at least one V-shaped projection (12) on a flexible tongue (11) provided on said part (8) or the support (1), said projection (12) being suitable for forcibly penetrating into a correspondingly shaped groove (13) provided on the support (1) or said part (8).

## FIG. 1

## FIG. 2

## FIG. 3

## FIG. 4